# EUROPEAN PATENT SPECIFICATION

(11) **EP 0 986 959 B1**
(45) Date of publication and mention of the grant of the patent: **29.11.2006**
(21) Application number: 98203136.1
(22) Date of filing: 18.09.1998
(51) Int. Cl.: A23G 9/48, A23D 7/00

(54) **Coating of frozen confectionery**
Beschichtung von gefrorener Süsspeisen
Enrobage des confiseries glacées

(43) Date of publication of application: 22.03.2000
(73) Proprietor: SOCIETE DES PRODUITS NESTLE S.A., 1800 Vevey (CH)
(72) Inventor: Wang, Junkuan, 1010 Lausanne (CH); Leas, Alain, Dublin, Ohio 43017 (US)
(74) Representative: Elleby, Gudrun

(56) References cited:
- EP-A- 0 430 180
- EP-A- 0 547 658
- EP-A- 0 657 105
- WO-A-97/02754
- US-A- 3 223 532
- US-A- 3 959 498
- PATENT ABSTRACTS OF JAPAN vol. 008, no. 156 (C-234), 19 July 1984 -& JP 59 059149 A (TAKA SHIYOKUHIN KOGYO KK), 4 April 1984

## Description

The present invention relates to a water-in-oil emulsion based coating and its applications as internal and external substitute for conventional fat-based coating in frozen desserts. It further relates to a method of coating a frozen confectionery product, for example, ice confectionery.

In a conventional fat-coated frozen confectionery product, for example an ice lolly, bar, morsel, cone, cup or cake, the fat may account for some 45-60% by weight of the coating. In ice confectionery products with conventional fat-based coatings, the fat gives some brittleness to the coating, the coating does not properly adhere to the ice confectionery core and there is poor flavor release in the mouth. In the art, weter-containing natural food composition, for example fruit juice, cannot be applied in the conventional fat-based coating.

Thus, it would be desirable to provide a coating composition which has a soft texture, a good adhesion on ice cream, substantially reduced fat content, good flavor release and good storage and heat-shock resistance, and which is able to be processed in a conventional coating operation.

In US-A-5,556,659 there is claimed a process for coating a frozen confectionery product in which the coating composition is calorie reduced in that it is in the form of a water-in-oil emulsion, wherein the emulsion comprises 40 to 55 % by weight water, 2 to 4 % by weight of an emulsifier system comprising decaglycerine decaoleate, and less than about 3 % by weight water-soluble compounds. This coating was designed to reduce the calorie while keeping the crispness/brittleness.

In JP-A-59,059,149 there is disclosed a reduced cost and calorie composition for enrobing ice confectionery based on a water-in-oil emulsion, in which the emulsifier system is a combination of polyglycerine condensed ricinoleic acid ester as major emulsifier and one of glycerine fatty acid ester, sorbitan fatty acid ester or lecithin as sub-emulsifier. In the emulsion additives like color, flavor and seasoning were combined for inexpensively making ice breams with different color and flavors. However, nothing is mentioned about the physical properties of coating made by the emulsion. The enrobing composition has a high fat content.

WO 97 02754 discloses low calorie water-in-oil emulsified coatings or inclusions for frozen confectionery products with 1.5 wt. % monoglyceride as emulsifier, 30 wt. % polymorphic fat such as cocoa butter or cocoa butter replacer and in the water phase 57 % carbohydrate thickener (which can also be a protein) which is polydextrose, glucose sirup or fixtures in the working examples. Other characteristics are textual attributes like specific Stephens hardness profile, which is a ratio of hardness at - 20° C to that at 20°C < 20. Another ratio is specified, it is the amount of thickener and sweetener over water that has to be > 1.5. Finally a ratio of solid fat content stabilized to unstabilized is > 1.5.

EP-A-0 547 658 has about the same content as WO 97 02754 with the difference that the emulsion is used as low calorie confectionery filling and there is no mention of ice cream coating application.

US-A-3 223 532 discloses w/o emulsions for very broad food use. For coating ice cream a concentrate w/o emulsion (35 % fat) has to be diluted to an emulsion with 59 % fat content to reduce viscosity (col. 3, In. 31, col. 7, Ins. 22-59). In addition a lipophilic thinner is used to replace a primary lipophilic emulsifier to reduce viscosity and to avoid sticking of the emulsion in the consumer mouth (col. 7, In. 15). The emulsion contains beewax which is used to produce a greater range of w/o emulsions which could not be obtained if beewax was omitted. The emulsifiers are lecithin, glyceryl mono-fatty acid esters, polyethylene glycol esters, acetylated tartrated esters of mono and diglycerides and polyethylene sorbitan monoesters of fatty acids (col. 4, Ins. 36-55).
For preparing the emulsion, the aqueous phase is added to the liquified fat-emulsifier-wax combination under strong agitation (col. 7, ln.60 to col. 8, ln.9). A finished emulsion of lowered viscosity is then obtained by adding the emulsion to additional melted fat under gentle agitation (co. 8, Ins. 14-14).

We have found that it is possible to produce a coating based on a water-in-oil emulsion which has the texture and flavor properties superior than conventional fat-based coatings and significantly better keeping properties, softness, e.g. less brittleness and better adhesion to frozen confectionery.

Accordingly, the present invention provides a water-in-oil emulsion for coating frozen dessert products, which comprises 20 to 35 % by weight fat phase, 80 to 65 % by weight water phase, said water phase containing 10 to 70 % by weight carbohydrates, said emulsion comprising 0.5 to 8% by weight of an emulsifier system comprising polysorbates, the water phase comprising high water-containing food liquids and beverages, selected from fruit juice with or without pulp, coffee, tea, honey, malt, caramel and maple syrup. The emulsifier can furthermore comprise sugar esters, polyglycerol polyricinolate; monoglycerides and combinations thereof with a global hydrophilic lipophilic balance of preferably 25.

In the context of the invention a coating composition is not limited to surface coating but also comprises using the coating in applications where alternate layers of ice confectionery and coating are made to create layered products. It may also be used to form solid pieces which may be used, for instance, in place of chocolate inclusions.

The frozen dessert material may be any dairy or non-dairy product, for instance ice cream, iced milk, sherbet, sorbet, frozen custard, frozen yoghurt or frozen mousse. It may be aerated or not.

Sugar and other water-soluble compounds (e.g. humectants) should preferably be present at levels exceeding about 5 % by weight of the total coating composition which help in providing sufficient softening of texture and emulsion stability.

Other ingredients may be present including sweeteners, flavorings or colorants, the proportions of which may be determined according to taste and/or appearance. Cocoa solids non-fat which may come from cocoa liquor or cocoa powder may be used as flavorings and other flavor e.g. coffee, may also be added, depending on preference.

The water phase may contain a preservative, e.g. a sorbate or ascorbic acid and has a pH of about 2.5 to 5 in order to ensure that it will not support the growth of spoilage microorganisms.

Other ingredients may be present inching sweeteners, flavorings or colorants, the proportions of which may be determined according to taste and/or appearance. Cocoa solids non-fat which may come from cocoa liquor or cocoa powder may be used as flavorings and other flavor e.g. coffee, may also be added, depending on preference.

With respect to the fat phase, fats such as coconut fat or vegetable fat stearin or blends with a liquid oil may be used, to give the required texture to the coating composition.

The water phase may contain a preservative, e.g. a sorbate or ascorbic acid and have preferably a pH of about 2,5 to 5 in order to ensure that it will not support the growth of spoilage microorganisms.

The resulting water phase may preferably be pasteurized, e.g. in a high temperature short time (HTST) mix plant consisting of high shear mix tank, plate heating/cooling exchanger, holding tubes and optionally homogenizer. As an alternative the heat exchanger may comprise a shell and tube heating/cooling unit without homogenizer.

The coating composition may further contain crispy inclusions e.g. cereals, like expanded or toasted rice or dried fruit pieces which must be coated in moisture barriers to delay the absorption of moisture from the coating, which would result eventually in their sogginess.

The invention further relates to a method of production of a previously defined coating composition, which comprises separately mixing water, ingredients of the aqueous phase with the preservative, aroma and sweetening agents at a low acidic pH to make the aqueous phase, separately mixing a fat phase with the emulsifier at a temperature where the fat is liquid and slowly introducing the aqueous phase into the fat phase while mixing to prepare a pre-emulsion, and then further mixing under shear according to the composition of the emulsion and thickeness of the coating required, wherein the water phase represents 65 to 80 % by weight and the emulsifier system 0.5 to 8 % by weight of the final composition.

The coating composition is prepared by dissolving the emulsifier in the molten fat at a temperature of 25 to 50° C. Then the aqueous phase is separately warmed up to a temperature of 30 to 45° C and progressively added to the fat phase under fine flow and agitation as a pre-emulsification step, thus forming a water-in-oil emulsion.

To achieve a desired viscosity for dipping application, the formed water-in-oil emulsion is further sheared. This can be done either in batch with a U-shape stirring rod agitator at a higher speed, in a colloidal mill, or in continuous with a rotor/stator dispersing device or pumping the pre-emulsion through a static mixer with a high flow speed. An in-line rotor/stator dispersing device or/and static mixer is preferred for a better consistency of the coating.

Preferably the final coating can be stored at a positive temperature of e.g. 20-22° C to get it solidified. It can be melted and well mixed for re-use.

The invention further relates to a method of coating a piece of frozen confectionery which comprises dipping the piece in a previously defined coating composition in the form of a water-in-oil emulsion, wherein the coating composition is at a temperature of 28 to 40° C.

The products obtained with this method have very good resistance to melting at about 20° C compared to products dipped in water-based coatings containing a pure aqueous phase which have a poor resistance to melting. In addition, water-based coatings need special equipment for subsequent cooling, sometimes at very low temperature to freeze the coating.

A drip test was carried out with the following equipment: a stainless steel grid/sieve hold on a support, a scale and a computer connected to the scale to record weight every preset time interval. The whole setting was placed in a room with controlled air temperature (20°C) and in which the relative humidity was about 50 to 60 %. The procedure was as follows:
an ice cream bar with the coating was first weighed and put on a grid/sieve of standard US 8 mesh with squared holes of 2.36 mm (0.0937 inch). The time was reset and the computer started to record weight. After 1 h, the experience was stopped. The weight were reported and the weight loss expressed per 100 g of initial weight for the product of following Example 1 and for a commercial product (Solero (R) disclosed in EP-A-0710074) for comparison purpose. The results are given in hollowing Table 1.

**Table 1**

| **Time (min.)** | **Weight loss (g) for the product of Example 1*** | **Weight loss (g) for the product of comparison** |
|---|---|---|
| 0 | 0 | 0 |
| 12 | 0 | 0 |
| 17 | 0 | 3 |
| 20 | 0 | 5 |
| 30 | 0 | 15 |
| 35 | 0 | 18 |
| 40 | 2 | 20 |
| 45 | 3 | 22 |
| 50 | 4 | 25 |
| 55 | 5 | 27 |
| 60 | 7 | 30 |

| | | |
|---|---|---|
| * not included in the invention | | |

It is clear from the above results that a coating according to the present invention has a much better resistance to melting than known water-based coatings.

The invention further relates to a method of moulding pieces of frozen confectionery, which comprises inserting in a mould a liquid coating as previously defined and sucking back the excess liquid coating to form a shell, filling in the shell with ice cream, backing off with additional liquid coating, optionaly inserting a stick and demoulding, e.g. by heating.

Ice cream pieces, portions, morsels, domes or cakes may also be coated using an enrober.

The invention is also related to the use of the coating composition to form a film or layer or an inclusion in a frozen dessert.

In a first application of the coating, the coating composition is dropped onto a belt or band or into a mould followed by cooling to form solid pieces, e.g. drops of coating which can be used as inclusions in ice cream.

In a second application, the coating composition can be sprayed to form a film or layer on the surface of an ice cream product or films or layers inside an ice cream product to form a multilayered product

In a further application of the coating composition, the liquid coating composition can be co-extruded with ice cream from a die to form a coating, a centre or ripple.

The following Examples further illustrate the present invention, in which percentages and parts are expressed by weight unless otherwise specified.

### Examples 1-2 (not included in the invention)

1. A aqueous phase was prepared by mixing raspberry fruit concentrate (65° Brix), water and sugar at ambient temperature and warmed up to 35-38° C.

A fat phase was separately prepared by mixing coconut oil and emulsifiers at 36-40° C. In case of sugar ester as emulsifier, the mixture was heated to 75° C to dissolve completely the sugar ester into oil and then the mixture was cooled down to 36-40° C, followed by the crystallization of a small portion of sugar ester in very fine particles, consequently, the fat phase became cloudy.

A 385 g of diluted raspberry fruit juice concentrate (35° C) was progressively (fine flow) added to a 165 g of fat mix (38° C), in a 600 ml of beaker (diameter 75 mm) under agitation (460 rpm) with a U-shape stirring rod, thus forming a water-in-oil emulsion. The agitation was continued at a temperature between 35 and 38° C. The ingredients of the composition are indicated in Table 2 hereinafter.

The emulsion was agitated with higher rotation speed (1000 rpm) by the same agitator for 1-2 min. and the resulting mass was then ready for dipping ice cream bars.

Ice cream bars were dipped into the above emulsion. It took about 100 seconds to wait until the end (tip) of the ice cream bar to set, due to accumulation of the coating. After drying the products were stored at -18° C. The coated ice cream bars were very shinny with attractive fruit color, and the coating was also soft (when cut with a knife at frozen, there was no cracking) and well adhered to the ice cream. The dipping results are summarized in Table 3 hereinafter.

**2.** A 700 g of diluted raspberry fruit juice concentrate (35° C) was progressively (fine flow) added to a 300 g of fat mix (39° C), in a 1000 ml of beaker under agitation (460 rpm) with a U-shape stirring rod, thus forming a water-in-oil emulsion. The agitation was continued at a temperature between 35 and 38°C. The ingredients of the composition are indicated in Table 2 hereinafter.

Then the emulsion was transferred to a separation funnel, which was positioned 50-60 cm above a rotor/stator dispersing device (UTL 25 basic ULTRA-TURRAX with dispersing element: S 25 KV-25 G-IL). The emulsion was passed through the dispersing device with a rotation speed of 8000 rpm. The resulting fine emulsion had a temperature of 35° C, and was applied for dipping ice cream bars. The dipping results are summarized in Table 3 hereinafter

**Table 2**

| Phase | Ingredient | Example | 1 | Example | 2 |
|---|---|---|---|---|---|
| | | % wt. | Ratio % | % wt. | Ratio % |
| **Fruit juice** | | | **70** | | **70** |
| | **Raspberry juice** concentrate | **45** | | **55** | |
| | Sugar | 25 | | 30 | |
| | Water | 30 | | 15 | |
| **Fat mix** | | | **30** | | **30** |
| | Coconut oil | 97.3 | | 97.3 | |
| | PGPR | 1.4 | | 1.4 | |
| | Sugar ester | 1.3 | | 1.3 | |

**Table 3**

| Samples | | Dip. temperature (°C) | Drip-time (s) | Dry-time (s) | Weight up-take (g) |
|---|---|---|---|---|---|
| Example 1 | | | | | |
| | 1 | 35.5 | 25 | 105 | 13.2 |
| | 2 | 35 | 22 | 104 | 12.2 |
| | 3 | 36 | 22 | 100 | 12.8 |
| | 4 | 36 | 22 | 90 | 11.1 |

| Example 2 | | | | | |
|---|---|---|---|---|---|
| | 1 | 35 | 30 | 105 | 17.8 |
| | 2 | 35 | 30 | 105 | 18.8 |
| | 3 | 34.5 | 24 | 111 | 17.3 |

| | | | | | |
|---|---|---|---|---|---|
| * The weight of uncoated ice cream bars was 43.5-44 g. | | | | | |

### Examples 3-4 (not included in the invention)

**3.** A similar procedure to that described in Example 1 was followed except that passion fruit concentrate was used and fine emulsification was performed with a polytron (TEKMAR) with a rotation speed of 3000 rpm for 1 min. The temperature of the fine emulsion was 37° C. The ingredients of the composition are indicated in Table 4 and the dipping results are summarized in Table 5 hereinafter.

**4.** A similar procedure to that described in Example 2 was followed that passion fruit concentrate was used. The throughput of the emulsion passing the UTL 25 basic was 110 g/min. The emulsion had a very good consistency. The ingredients of the composition are indicated in Table 4 and the dipping results are summarized in Table 5 hereinafter.

The emulsion was passed for the second time through the dispersing device with rotation speed of 13000 rpm. No significant change in viscosity was observed.

**Table 4**

| Phase | Ingredient | Example | 3 | Example | 4 |
|---|---|---|---|---|---|
| | | % wt. | Ratio % | % wt. | Ratio % |
| **Fruit juice** | | | **70** | | **70** |
| | **Passion fruit juice** Concentrate (50° Brix, 17% pulp) | 30 | | 30 | |
| | Sugar | 30 | | 30 | |
| | Water | 40 | | 40 | |
| **Fat mix** | | | **30** | | **30** |
| | Coconut oil | 97.3 | | 97.3 | |
| | PGPR | 1.4 | | 1.4 | |
| | Sugar ester | 1.3 | | 1.3 | |

**Table 5**

| Samples | | Dip-temperature (°C) | Drip-time (s) | Dry-time (s) | Weight up-take (g) |
|---|---|---|---|---|---|
| Example 3 | | | | | |
| | 1 | 36.5 | 20 | 65 | 13.5 |
| | 2 | 35 | 19 | 65 | 13.7 |
| | 3 | 34.8 | 20 | 65 | 14 |
| | 4 | 33 | 20 | 75 | 14.5 |
| | 5 | 32.3 | 20 | 67 | 14.2 |

| Example 4 | | | | | |
|---|---|---|---|---|---|
| | 1 | 33.5 | 20 | 73 | 12.8 |
| | 2 | 33.7 | 17 | 67 | 13.2 |
| | 3 | 33.7 | 19 | 70 | 13.3 |
| | 4 | 33.7 | 19 | 66 | 13 |
| | 5 | 33.5 | 20 | 70 | 13.2 |

| | | | | | |
|---|---|---|---|---|---|
| * The weight of uncoated ice cream bars was 43.5-44 g. | | | | | |

### Example 5 (not included in the invention)

A similar procedure to that described in Example 4 was followed except that the rotating speed of the in-line dispersing device was 9500 rpm. The resulting emulsion was as good as that described in Example 4. The ice cream bars were well covered and the drip-time and the setting time were in the same range as obtained in Example 4. The weight pick-up was between 11.5 and 13 g.

### Example 6 (not included in the invention)

Fat phase was prepared by adding 0.3% of cofarom aroma oil (a mix of coffee oil 97% and coffee distillate 3%) to the fat mix described in Example 1.

Aqueous phase was prepared by adding 10% of sugar to fresh brewed coffee. 80 g of coffee ground was put in the filter and 1280 g of coffee brew was obtained. Solid content of the coffee brew 2.8%.

A 700 g of the aqueous phase (39° C) was progressively (fine flow) added to a 300 g of the fat phase (38° C), in a 1000 ml of beaker under agitation (460 rpm) with a U-shape stirring rod, thus forming a water-in-oil emulsion. The agitation was continued at a temperature between 28 and 30° C. The dipping was performed directly at 29-30° C and the setting time was comparable to that of fruit emulsion.

After the emulsion was kept overnight at ambient temperature (no separation), it was warmed up to 29° C under agitation. The ice cream bars were dipped and it gave very good coverage and color of milk chocolate. The weight pick-up was about 12.5 g. On tasting, it gave a quick, strong coffee taste, which was not bitter and excellent.

At the moment when the ice cream bar was taken out from the emulsion, it had very smooth and shinning surface. Surprisingly, then during setting there appeared many tiny spots of homogeneous pattern, which gave a significantly enhanced coffee note.

### Examples 7-8

**7.** As for the example 1, an aqueous phase was prepared by mixing the raspberry fruit concentrate (65° Brix), water and sugar at ambient temperature until all the solids were dissolved. The resulting solution was pasteurized in a HTST system at 82° C for 25 seconds. The pasteurized aqueous phase was collected and stored at 4-6° C until use. Thus the aqueous phase was warmed up to 35-40° C.

A fat phase was separately prepared by mixing coconut oil, high melting stearin (melted in a small amount of coconut oil) and emulsifiers at 36-40° C.

A 700 g of diluted raspberry fruit juice concentrate (35° C) was progressively (fine flow) added to a 300 g of fat mix (38°C), in a 1000 ml of under agitation (300 rpm) with a U-shape stirring rod, thus forming a water-in-oil emulsion. The emulsion was then agitated at a temperature between 35 and 38° C with higher rotation speed (500 rpm) by the same agitator for 1 min. and the resulting mass ws then ready for dipping ice cream bars. The ingredients of the composition are indicated in Table 6 hereinafter.

Ice cream bars were dipped into the above emulsion. The drip-time was 15 seconds and the dry-time was about 100 s. The weight pick-up of the ice cream bar was 21.6 g (ice cream bar : 48 g). During the time of setting there appeared many tiny spots evenly distributed, which gave a significantly enhanced fruit note.

After drying the products were stored at -20°C. The coated ice cream bars were very shinny with attractive fruit color, and the coating was also soft, when cut with a knife at frozen there was no cracking. The coating well adhered to the ice cream.

**8.** Both aqueous and fat phases were prepared as described in Example 7. The ingredients of the composition are indicated in Table 6 hereinafter.

A 51 kg of the aqueous phase (38° C) was pumped to a 17 kg of the fat phase (40° C) while mixing at a speed of 50 rpm. Once all the aqueous phase was added to the fat phase the mixing was continued for 10 min. to form a pre-emulsion. The pre-emulsion was pumped through a static mixer with a flow rate of 15 l/min. to a holding tank. The emulsion collected in the holding tank was kept at 35-40° C with slow agitation and was ready to use for ice cream coating.

**Table 6**

| Phase | Ingredient | Example | 7 | Example | 8 |
|---|---|---|---|---|---|
| | | % wt. | Ratio % | % Wt. | Ratio % |
| **Fruit juice** | | | **70** | | **75** |
| | **Raspberry juice** concentrate | 15 | | 15 | |
| | Sugar | 50 | | 50 | |
| | Water | 35 | | 35 | |
| **Fat mix** | | | **30** | | **25** |
| | Coconut oil | 93 | | 93.7 | |
| | Monoglycerides | 6 | | 5 | |
| | Polysorbates | 0,5 | | 0.8 | |
| | Stearin | 0.5 | | 0.5 | |

### Example 9

Ice cream domes were prepared using an ice cream mix with 58.5 % water, 31.9 % solids non-fat , 9.6 % fat and 50-120% overrun. The domes were then passed through a freezing tunnel and completely frozen at -22° C. Finally the domes were enrobed with the coating composition of Example at 38° C. The domes obtained were adequately covered with a uniform layer of coating which stuck properly to the surface.

This method was also suitable for preparing bars and bite-size pieces.

### Example 10

Cells of a stick machine in a brine tank of -38°C were filled with the coating composition of Example 8 at 35° C. After 10 s, excess coating composition was sucked-back and ice cream of 80 % overrun was deposited at -2.5° C into the thus formed shells. After insertion of sticks and backing off with more coating at 35° C, the ice sticks were demoulded by heating at 12° C and flow-wrapped.

### Example 11

The coating of Example 8 was drop moulded by depositing in small beads on a steel band cooled at -20° C to give small tear-shaped pieces which were further cooled in a tunnel and stored at -20°C. These pieces can be used as inclusions in ice cream.

### Example 12

The method of Example 11 was carried out but the coating was deposited in small moulds. After cooling, the small pieces were demoulded

## Claims

1. A water-in-oil emulsion for coating frozen desserts products, which comprises
20 to 35 % per weight fat phase,
80 to 65 % per weight water phase comprising a high water-containing food liquid or beverage, such as fruit juice with or without pulp, tea, coffee, honey, malt, caramel or maple syrup,
said water phase containing 10 to 70 % per weight carbohydrates
and said emulsion comprising 0.5 to 8 % by weight of an emulsifier system,
the emulsifier system comprising polysorbates.

2. The emulsion according to claim 1, in which the emulsifier further comprises sugar esters, polyglycerol polyricinoleate, monoglycerides and combination thereof with a global hydrophilic lipophilic balance of preferably <5.

3. The emulsion according to claim 1,
which further comprise other ingredients including sweeteners, flavorings, colorants, the proportions of which may be determined according to taste and/or appearance.

4. The emulsion according to claim 1,
including sweeteners, flavorings such as cocoa solids non-fat which may come from cocoa liquor or cocoa powder, coffee, caramel, fruit, the proportions of which may be determined according to taste and/or appearance.

5. A method of production of a coating composition according to anyone of claims 1 to 4,
which comprises separately mixing water, ingredients of the aqueous phase with the preservative, aroma and sweetening agents at a low acidic pH to make the aqueous phase, separately mixing a fat phase with the emulsifier at a temperature where the fat is liquid and slowly introducing the aqueous phase into the fat phase while mixing to prepare a pre-emulsion, and then further mixing under shear according to the composition of the emulsion and thickness of the coating required, wherein the water phase represents 80 to 65 % by weight and the emulsifier system 0.5 to 8 % by weight of the final composition.

6. The method according to claim 5,
which comprises pasteurizing the water phase in a high temperature short time mix plant consisting of high shear mix tank, heating/cooling exchanger, holding tubes and optionally homogenizer.

7. Use of a water-in-oil emulsion, of which the composition is as mentioned in anyone of claims 1 to 4,
in a frozen confectionery product, to provide the frozen confectionery product a good resistance to melting, good softness, well adherence to ice cream and improved flavour release.

8. A method of coating a piece of frozen confectionery which comprises dipping the piece in a coating composition in the form of a water-in-oil emulsion according to anyone of claims 1 to 4,
wherein the coating composition is at a temperature of 28 to 40°C.

9. A method of moulding pieces of frozen confectionery,
which comprises inserting in a mould a liquid coating according to anyone of claims 1 to 4,
sucking back the excess liquid coating to form a shell, filling in the shell with ice cream, backing off with additional liquid coating, inserting a stick and demoulding.

10. Use of the coating composition according to anyone of claims 1 to 4, to form a film or layer or an inclusion in a frozen dessert article.

11. A method of co-extruding the composition according to anyone of claims 1 to 4,
with ice cream from a die to form a coating, centre or ripple.

## Patentansprüche

1. Wasser-in-Öl-Emulsion zum Beschichten gefrorener Dessert-Produkte, welche umfasst:
20 bis 35 Gewichts-% Fett-Phase,
80 bis 65 Gewichts-% Wasser-Phase, welche eine viel Wasser enthaltende Nahrungsmittel-Flüssigkeit oder ein Getränk, wie Fruchtsaft mit oder ohne Fruchtfleisch, Tee, Kaffee, Honig, Malz, Karamell oder Ahorn-Sirup umfasst,
wobei die Wasser-Phase 10 bis 70 Gewichts-% Kohlenhydrate enthält,
und wobei diese Emulsion 0,5 bis 8 Gewichts-% eines Emulgator-System umfasst,
wobei das Emulgator-System Polysorbate umfasst.

2. Emulsion gemäß Anspruch 1, wobei der Emulgator ferner Zucker-Ester, Polyglycerin-Polyricinoleat, Monoglyceride und Kombinationen hiervon mit einem Wert für die globale hydrophile-lipophile-Balance (HLB-Wert) von bevorzugt < 5 umfasst.

3. Emulsion gemäß Anspruch 1,
welche ferner andere Ingredienzien umfasst, inklusive Süßstoffe, Geschmacksstoffe, Farbstoffe, deren Mengen entsprechend dem Geschmack und/oder dem Aussehen 25 bestimmt werden können.

4. Emulsion gemäß Anspruch 1,
welche Süßstoffe, Geschmacksstoffe, wie fettfreie Kakaofeststoffe beinhaltet, welche aus Kakaoflüssigkeit oder Kakaopulver, Kaffee, Karamell, Frucht stammen können, deren Mengen entsprechend dem Geschmack und/oder dem Aussehen bestimmt werden können.

5. Verfahren zum Herstellen einer Beschichtungs-Zusammensetzung gemäß einem der Ansprüche 1 bis 4, welches umfasst: separates Mischen von Wasser,
Ingredienzien der wässrigen Phase mit dem Konservierungsmittel, Aroma- und Süßstoffen bei einem schwach-sauren pH, um die wässrige Phase zu erzeugen, separates Mischen einer Fett-Phase mit dem Emulgator bei einer Temperatur, bei welcher das Fett flüssig ist, und langsames Einbringen der wässrigen Phase in die Fett-Phase
unter Mischen, um eine Vor-Emulsion herzustellen, und dann weiteres Mischen unter Scherung gemäß der Zusammensetzung der Emulsion und erforderlichen Dicke der Beschichtung, wobei die Wasser-Phase 80 bis 65 Gewichts-%, und das Emulgator-System 0,5 bis 8 Gewichts-% der endgültigen Zusammensetzung repräsentiert.

6. Verfahren gemäß Anspruch 5,
welches das Pasteurisieren der Wasser-Phase in einer Hochtemperatur-Kurzzeit-MischAnlage umfasst, welche aus einem stark scherend mischenden Tank, einem heizenden/kühlenden Austauscher, Halte-Rohren und einem optionalen Homogenisator besteht.

7. Verwendung einer Wasser-in-ÖI-Emulsion, deren Zusammensetzung in einem der Ansprüche 1 bis 4 erwähnt ist, in einem gefrorenen Konfektprodukt, um dem gefrorenen Konfektprodukt eine gute Beständigkeit gegenüber Schmelzen, eine gute Weichheit, eine gute Anhaftung an Eiscreme und eine verbesserte Geschmacksfreisetzung zu verleihen.

8. Verfahren zum Beschichten eines Stücks aus gefrorenem Konfekt, welches umfasst: Eintauchen des Stücks in eine Beschichtungs-Zusammensetzung in Form einer Wasser-in-ÖI-Emulsion gemäß einem der Ansprüche 1 bis 4,
wobei sich die Beschichtungszusammensetzung bei einer Temperatur von 28 bis 40°C befindet.

9. Verfahren zum Formen von Stücken aus gefrorenem Konfekt, welches umfasst:
Einführen einer flüssigen Beschichtung gemäß einem der Ansprüche 1 bis 4 in eine Form, Zurücksaugen der überschüssigen flüssigen Beschichtung zum Ausbilden einer Hülle, Einfüllen von Eiscreme in die Hülle, Verstärkung mit zusätzlicher flüssiger Beschichtung, Einsetzen eines Stiels und Entnahme.

10. Verwendung der Beschichtungs-Zusammensetzung gemäß einem der Ansprüche 1 bis 4 zum Ausbilden eines Films oder einer Schicht oder eines Einschlusses in einem gefrorenen Dessertartikel.

11. Verfahren zum Coextrudieren der Zusammensetzung gemäß einem der Ansprüche 1 bis 4,
mit Eiscreme aus einer Düse zum Ausbilden einer Beschichtung, eines Mittelstücks oder einer Rippelung.

## Revendications

1. Émulsion du type eau-dans-huile destinée à enrober des produits de dessert congelés, qui comprend
20 à 35 % en poids de phase grasse,
80 à 65 % en poids de phase aqueuse comprenant une boisson ou un aliment liquide à forte teneur en eau, comme un jus de fruit avec ou sans pulpe, du thé, du café, du miel, du malt, du caramel ou du sirop d'érable,
ladite phase aqueuse contenant 10 à 70 % en poids de glucides
et ladite émulsion comprenant 0,5 à 8 % en poids d'un système émulsifiant,
le système émulsifiant comprenant des polysorbates.

2. Émulsion selon la revendication 1, dans laquelle l'émulsifiant comprend de plus des esters de sucre, du polyricinoléate de polyglycérol, des monoglycérides et des associations d'entre eux, le rapport hydrophile-lipophile global étant de préférence inférieur à 5.

3. Émulsion selon la revendication 1, qui comprend de plus d'autres ingrédients comprenant des édulcorants, des aromatisants, des colorants, dont les proportions peuvent être déterminées selon le goût et/ou l'aspect.

4. Émulsion selon la revendication 1, comprenant des édulcorants, des aromatisants tels que la matière sèche non grasse de cacao qui peut provenir de liqueur de cacao ou de poudre de cacao, du café, du caramel, un fruit, dont les proportions peuvent être déterminées selon le goût et/ou l'aspect.

5. Procédé de production d'une composition d'enrobage selon l'une quelconque des revendications 1 à 4, qui comprend les étapes consistant à mélanger séparément de l'eau, les ingrédients de la phase aqueuse avec les agents conservateurs, aromatisants et édulcorants à un bas pH acide pour former la phase aqueuse, mélanger séparément une phase grasse avec l'émulsifiant à une température à laquelle la matière grasse est liquide et introduire lentement la phase aqueuse dans la phase grasse tout en mélangeant pour préparer une préémulsion, puis mélanger encore sous cisaillement selon la composition de l'émulsion et l'épaisseur de l'enrobage requis, dans lequel la phase aqueuse représente 80 à 65 % en poids et le système émulsifiant 0,5 à 8 pour cent en poids de la composition finale.

6. Procédé selon la revendication 5, qui comprend la pasteurisation de la phase aqueuse dans une installation de mélange à haute température et courte durée consistant en un réservoir de mélange à fort cisaillement, un échangeur chauffant/refroidissant, des tubes de rétention et facultativement un homogénéiseur.

7. Utilisation d'une émulsion du type eau-dans-huile dont la composition est telle que mentionnée dans l'une quelconque des revendications 1 à 4, dans un produit de confiserie congelé, pour conférer au produit de confiserie congelé une bonne résistance à la fonte, une bonne plasticité, une bonne adhérence à une crème glacée et une meilleure libération d'arôme.

8. Procédé d'enrobage d'une pièce de confiserie congelée, qui comprend le trempage de la pièce dans une composition d'enrobage sous la forme d'une émulsion du type eau-dans-huile selon l'une quelconque des revendications 1 à 4, dans lequel la composition d'enrobage est à une température de 28 à 40°C.

9. Procédé de moulage de pièces de confiserie congelées, qui comprend les étapes consistant à introduire dans un moule une matière d'enrobage liquide selon l'une quelconque des revendications 1 à 4, retirer par aspiration l'excès de matière d'enrobage liquide pour former une coquille, remplir la coquille de crème glacée, recouvrir avec un supplément de matière d'enrobage liquide, insérer un bâtonnet et démouler.

10. Utilisation de la composition d'enrobage selon l'une quelconque des revendications 1 à 4, pour former un film ou une couche ou une inclusion dans un article de dessert congelé.

11. Procédé de coextrusion par une filière de la composition selon l'une quelconque des revendications 1 à 4 avec une crème glacée pour former un enrobage, un coeur ou une ondulation.
